# EUROPÄISCHE PATENTSCHRIFT

(11) **EP 0 978 206 B1**
(45) Veröffentlichungstag und Bekanntmachung des Hinweises auf die Patenterteilung: **06.11.2002**
(21) Anmeldenummer: 98931937.1
(22) Anmeldetag: 17.04.1998
(51) Int. Cl.: H04Q 7/22

(54) **VERFAHREN UND KOMMUNIKATIONSNETZ ZUR ADMINISTRIERUNG ZUSÄTZLICHER DIENSTE**
METHOD AND COMMUNICATIONS NETWORK FOR THE ADMINISTRATION OF SUPPLEMENTARY SERVICES
PROCEDE ET RESEAU DE COMMUNICATION POUR L'ADMINISTRATION DE SERVICES SUPPLEMENTAIRES

(30) Priorität: 25.04.1997 DE 19717588
(43) Veröffentlichungstag der Anmeldung: 09.02.2000
(73) Patentinhaber: SIEMENS AKTIENGESELLSCHAFT, 80333 München (DE)
(72) Erfinder: DZUBAN, Stanislav, A-1020 Wien (AT); LEITGEB, Manfred, A-2440 Gramatneusiedl (AT)
(86) Internationale Anmeldenummer: DE9801079
(87) Internationale Veröffentlichungsnummer: WO98049841

(56) Entgegenhaltungen:
- EP-A- 0 715 473
- WO-A-96/20572
- US-A- 5 504 804
- HOLLEY K A: "GLOBAL SYSTEM FOR MOBILE COMMUNICATIONS - WHAT'S IN STORE?" BT TECHNOLOGY JOURNAL, Bd. 14, Nr. 3, 1. Juli 1996, Seiten 47-54, XP000598154

## Beschreibung

Die Erfindung betrifft ein Verfahren zur Administrierung zusätzlicher Dienste in einem Kommunikationsnetz, ein entsprechendes Kommunikationsnetz sowie eine für das Verfahren ausgestaltete Dienstesteuerungsstelle, wobei die zusätzlichen Dienste gemäß einer intelligenten Netzstruktur nutzbar sind.

Kommunikationsnetze sind beispielsweise als Festnetze oder Mobilkommunikationssysteme, wie das bekannte GSM-Mobilfunknetz (Global System for Mobile Communications), ausgebildet und weisen untereinander vernetzte Vermittlungseinrichtungen auf. In Mobilfunknetzen sind an die Vermittlungseinrichtungen jeweils Basisstationen angeschlossen, durch die über eine Luftschnittstelle Kommunikationsendgeräte anschließbar sind. Diese als Mobilstationen bezeichneten Kommunikationsendgeräte ermöglichen einem mobilen Teilnehmer des Kommunikationssystems den Netzzugang. Die Vermittlungseinrichtungen bewirken darüber hinaus den Übergang zu anderen Netzen, z.B. Datenübertragungsnetzen oder einem Festnetz.

Aus dem GSM-Mobilfunknetz ist es weiterhin bekannt, Speichereinheiten, in denen jeweils teilnehmerspezifische Daten zu den netzeigenen Diensten gespeichert sind, zu verwenden Eine dieser Speichereinheiten ist das Heimatregister, das sich in der Regel an einem fest definierten Ort befindet und in dem die der Registrierung des Teilnehmers zugrundeliegenden Daten abgelegt sind. Die Daten enthalten u.a. auch die vom Teilnehmer nutzbaren Dienste. Durch Teilnehmerselbsteingaben in die Mobilstation können die Teilnehmer die Dienstedaten steuern, d.h. auch verändern. Für die standardisierten GSM-Dienste sind Teilnehmerselbsteingabe-Operationen - MMI (Man-Machine-Interface)-Grundfunktionen und MMI-Prozedurenmöglich, die zu Beginn/Ende einer Verbindung einen Dialog zum Heimatregister bewirken. Dazu wird ein fest definiertes Funktionsprotokoll mit standardisiertem Inhalt verwendet. Auch die Teilnehmerselbsteingabe während einer Verbindung ist grundsätzlich möglich. Zur Signalisierung von nicht-GSM standardisierten Diensten im Mobilfunknetz können bekanntlich unstrukturierte Zusatzdienste-Operationen auf der Basis von USSD-Containernachrichten (Unstructured Supplementary Service Data) ablaufen, die zwischen der Mobilstation und einer Netzeinrichtung des Mobilfunknetzes ablaufen. Die bestehende USSD-MMI-Operation weist einen definierten Zeichensatz auf.

GSM-Mobilstationen unterscheiden automatisch zwischen den Teilnehmerselbsteingaben für standardisierte Dienste und allen anderen Eingaben und benutzen zur Datenübertragung entsprechende Protokolle. So werden alle Eingaben, die von der Mobilstation nicht als Rufnummer oder als standardisierte Teilnehmerselbsteingabe erkannt werden, zum Mobilfunknetz als USSD-Containernachrichten übertragen.

Für ein möglichst flexibles Einführen, Erweitern und Nutzen neuer Dienste geht man zur Dienstesteuerung durch intelligenter Netzstrukturen über. Vom Transportnetz, d.h. z.B. dem Mobilfunknetz, unabhängige Dienstesteuerungsstellen (Service Control) eines Intelligenten Netzes enthalten jeweils Steuerfunktionen (Service Control Function) zur Abwicklung der Dienste und Datenfunktionen (Service Data Function) zur Bereitstellung der für die Dienste notwendigen Daten. Aus der EP 0 715 473 A2 ist es bekannt, daß die in einem Intelligenten Netz nutzbaren Dienste in einer Dienstevermittlungsstelle angestoßen werden, um einen Ausstieg aus der üblichen Anrufverarbeitung zu bewirken und damit einen Zugriff zu zusätzlichen Diensten im Rahmen einer Anrufverbindung zu aktivieren. Solche Dienstevermittlungsstellen können in den Vermittlungseinrichtungen oder als getrennte Einrichtungen realisiert sein. Dabei wird eine Dienstekennung als teilnehmerindividuelles Teilnehmerdatum in der jeweiligen Teilnehmerdatenbasis gespeichert und durch Auswerten dieser Dienstekennung -nur während der Anrufbehandlung bei einem ankommenden oder abgehenden Anruf - eine Verzweigung zu einer Dienstesteuerungsstelle des Intelligenten Netzes ausgelöst.

Neben den auch für Teilnehmer von Festnetzen nutzbaren Diensten gemäß der intelligenten Netzstruktur ist speziell für Mobilfunknetze eine sogenannte CAMEL (Customized Application for Mobil network Enhanced Logic) Plattform bekannt, mit der die Unterstützung von zusätzlichen anbieterspezifischen Diensten für mobile Teilnehmer ermöglicht werden soll. Damit kann auch über Netz- und Dienstegrenzen eines Kommunikationsnetzes hinweg ein betreiberspezifischer zusätzlicher Dienst genutzt werden. Die Steuerfunktion und Datenfunktion zur Dienstebehandlung sind ebenfalls in einer Dienstesteuerungsstelle (CAMEL Service Environment) realisiert.

Aus der internationalen Patentanmeldung WO 96/20572 ist ein zellular aufgebautes Mobilfunknetz nach dem GSM-Standard bekannt, das vor allem die Steuerung einer interaktiven Kommunikation zwischen einem Mobiltelefon bzw. mobilen Teilnehmer des Mobilfunknetzes und netzexternen Einrichtungen (TTEN), die im Beispiel einen üblichen Ansagedienst oder einen üblichen Faxdienst zur Verfügung stellen, beschreibt. Für die Steuerung der Interaktion werden USSD-Nachrichten von der MS zum Netz übertragen und netzseitig vom Heimatregister ausgewertet, ob eine HLR-Anwendung oder eine TTEN-Anwendung gewünscht und durchzuführen ist. Im zuletzt genannten Fall wird eine zusätzliche Netzeinrichtung - die Transfereinrichtung (TTU) - in die Interaktion eingeschaltet, die als gesonderte Steuereinrichtung zur Behandlung aller TTEN-Anwendungen zusätzlich im Netz angeordnet ist. Die TTU selektiert als die zuständige gesonderte Netzeinrichtung die für die Behandlung der TTEN-Anwendungen jeweils geeigneten netzexternen Einrichtungen.

Es ist Aufgabe der Erfindung, den Teilnehmern eines Kommunikationsnetzes mit möglichst geringem Aufwand und transparent für das Kommunikationsnetz zu ermöglichen, auf zusätzliche IN-Dienste zugreifen zu können.

Diese Aufgabe wird gemäß der Erfindung durch die Merkmale des Patentanspruchs 1 hinsichlich des Verfahrens, durch eine Dienstesteuerungeinheit mit den Merkmalen von Patentanspruch 13 und durch ein Kommunikationsnetz mit den Merkmalen von Patentanspruch 12 gelöst. Vorteilhafte Weiterbildungen der Erfindung sind den Unteransprüchen zu entnehmen.

Ausgehend davon, daß eine Teilnehmerselbsteingabe in das Kommunikationsendgerät von dem Teilnehmer für einen zusätzlichen Dienst initiiert wird und auf Grund der Teilnehmerselbsteingabe zumindest eine strukturierte Containernachricht von dem Kommunikationsendgerät erzeugt und zur Speichereinheit gesendet wird, erfolgt erfindungsgemäß zur Nutzung von durch eine Dienstesteuerungsstelle gemäß einer Intelligenten Netzstruktur steuerbaren zusätzlichen Diensten die Implementierung einer Schnittstelle unmittelbar zwischen der Speichereinheit und der Dienstesteuerungsstelle, sodaß die empfangene Containernachricht nach Auswertung deren Inhalts direkt zur Dienstesteuerungsstelle gemäß einem Schnittstellenprotokoll übertragen wird.

Die zwischen Speichereinheit und Dienstesteuerungsstelle implementierte Schnittstelle ermöglicht es, daß über die Teilnehmerselbsteingabe für den zusätzlichen Dienst die Containernachricht(en) bis zur Dienstesteuerungsstelle durchgereicht werden kann (können). Dadurch ist eine einfache Dienstebehandlung - z.B. zur Abfrage, Erweiterung und/ oder Modifikation von Dienstedaten des jeweiligen Dienstes usw. - für alle zusätzlichen Dienste gemäß der intelligenten Netzstruktur ausgehend von der Teilnehmerselbsteingabe einheitlich möglich. Die strukturierte Containernachricht für die Ansteuerung des zusätzlichen Dienstes ist dem Kommunikationsgerät einerseits und der Dienstesteuerungsstelle andererseits bekannt und wird somit transparent durch das Kommunikationsnetz transportiert.

Durch den Gegenstand der Erfindung besteht auch die Möglichkeit, betreiberspezifische Dienste gemäß der Phase 1 der CAMEL-Plattform für eine Dienstebehandlung in der Dienstesteuerungsstelle anzusteuern, um beispielsweise die Dienstedaten des zusätzlichen Dienstes zu modifizieren. Eine Anwendung des erfindungsgemäßen Verfahrens in einem Mobilfunknetz bewirkt, daß die Containernachricht auf Grund der Teilnehmerselbsteingabe automatisch immer zu einem Heimatregister gelenkt und von dort zur Dienstesteuerungsstelle weitergeleitet wird. Dadurch erübrigt sich jegliche spezifische Unterstützung der zusätzlichen Dienste in einem vom Heimat-Mobilfunknetz abweichenden Besucher-Mobilfunknetz, in dessen Zuständigkeitsbereich der Teilnehmer sich bewegt hat. Dies bedeutet, daß alle Dienste, die zur Dienstesteuerung nur die Funktionalität der CAMEL-Phase 1 benötigen und die von der CAMEL-Phase 2 nur die Administrierung über die Teilnehmerselbsteingabe gemäß der Erfindung brauchen, auch in anderen Besucher-Mobilfunknetzen mit lediglich einer CAMEL-Phase 1 Diensteunterstützung von den Netzbetreibern angeboten werden können. Auf diese Weise kann die Anforderung einer vollständigen Diensteunterstützung von CAMEL-Phase 2 eingeschränkt werden.

Entsprechend einer vorteilhaften Weiterbildung der Erfindung wird ein Dienstecode in der strukturierten Containernachricht mitgesendet und von der Speichereinheit ausgewertet, bevor abhängig von dem Auswerteergebnis die Containernachricht zur Dienstesteuerungsstelle weitergeleitet wird. Damit läßt sich auf einfache Weise in der Nachricht für jeden Dienst individuell kennzeichnen, ob es sich um einen zusätzlichen Dienst handelt, der gemäß der Erfindung zur Dienstesteuerung an die Dienstesteuerungsstelle weiterzuleiten ist. Vorteilhafterweise erfolgt die Auswertung durch einen Vergleich des Dienstecodes mit Dienstecodes eines Dienstecodebereichs, durch die die von der Dienstesteuerungsstelle steuerbaren zusätzlichen Diensten gekennzeichnet werden. Bei Übereinstimmung des Dienstecodes mit einem der Dienstecodes des Dienstecodebereichs wird dann die Containernachricht zur Dienstesteuerungsstelle weitergeleitet.

Als Dienstecodebereich für die von der Dienstesteuerungsstelle steuerbaren zusätzlichen Dienste wird gemäß einer vorteilhaften Ausgestaltung der Erfindung zumindest ein Teilbereich eines zur Ansteuerung der Speichereinheit benutzten Dienstecodebereichs reserviert. Damit findet eine Aufteilung der Dienstesteuerung zwischen Speichereinheit und Dienstesteuerungsstelle derart statt, daß nur die auf Grund der Teilnehmerselbsteingaben erzeugten Nachrichten, die einen innerhalb des reservierten Dienstecodebereichs liegenden Dienstecode enthalten, zur Verarbeitung in der Dienstesteuerungsstelle weitergeleitet werden. Dies bringt den Vorteil einer Reduzierung der Signalisierungslast auf der Schnittstelle zwischen Speichereinheit und Dienstesteuerungsstelle und somit auch der gesamten Verarbeitungslast in der Dienstesteuerungsstelle gegenüber dem Fall, daß alle Nachrichten automatisch durchgereicht werden, mit sich.

Gemäß einer anderen vorteilhaften Weiterbildung der Erfindung wird eine für mehrere von der Dienstesteuerungsstelle steuerbaren zusätzlichen Dienste gemeinsame Steuerinformation in der strukturierten Containernachricht mitgesendet und von der Speichereinheit ausgewertet, die der Speichereinheit jeweils signalisiert, die Containernachricht an die Dienstesteuerungsstelle weiterzuleiten. Damit ist nur eine einzige Steuerinformation notwendig, die als Filter für mehrere - im Maximalfall für alle - zusätzlichen Dienste wirkt und das Weiterleiten der Containernachricht zur Dienstesteuerungsstelle signalisiert.

Vorteilhafterweise wird das im Kommunikationsnetz benutzte Signalisierungsprotokoll als Schnittstellenprotokoll zur Übertragung der Containernachricht auf der Schnittstelle zwischen der Speichereinheit und der Dienstesteuerungsstelle verwendet. Dadurch brauchen nur geringfügige Erweiterungen eines bestehenden Protokolls zum Durchreichen der strukturierten Containernachricht für die Steuerung der zusätzlichen Dienste auf Grund einer Teilnehmerselbsteingabe erfolgen, was für das Schnittstellenprotokoll hinsichtlich Aufwand und Erprobung Vorteile verschafft.

Gemäß einer weiteren Ausgestaltung der Erfindung werden Steuerinformationen zur Behandlung von Dienstedaten für den zusätzlichen Dienst und/oder Dienstedaten in der strukturierten Containernachricht mitgesendet und von der Dienstesteuerungsstelle ausgewertet. Bevorzugt werden Dienstesteuerfunktionen wie Registrieren, Aktivieren/Deaktivieren, Freigeben oder ein Modifizieren des jeweiligen zusätzlichen Dienstes abhängig von den ausgewerteten Steuerinformationen durch die Dienstesteuerungsstelle durchgeführt.

Es hat sich auch als vorteilhaft erwiesen, daß die Dienstesteuerungsstelle eine den zusätzlichen Dienst betreffende Nachricht erzeugt und über die Schnittstelle zur Speichereinheit sendet, die die Nachricht zu dem Kommunikationsendgerät weiterleitet. Damit können auch netzseitig Dialoge initiiert und Nachrichten mit Informationen von der zusätzliche Dienste steuernden Dienstesteuerungsstelle über die Speichereinheit transparent für das Kommunikationsnetz zum Teilnehmer bzw. Kommunikationsendgerät transportiert werden.

Eine besonders vorteilhafte Weiterbildung der Erfindung besteht in der Anwendung in einem Mobilfunknetz mit zumindest einem Heimatregister, das mit der Dienstesteuerungsstelle über die Schnittstelle zum Weiterleiten der Containernachricht verbunden ist. Vorzugsweise wird ein mobilfunkspezifisches Signalisierungsprotokoll zur Übertragung der Containernachricht auf der Schnittstelle verwendet.

Das Kommunikationsnetz gemäß der Erfindung weist eine Steuereinrichtung zum Empfangen und Auswerten zumindest einer strukturierten Containernachricht auf, die auf Grund einer von dem Teilnehmer durchgeführten Teilnehmerselbsteingabe in das Kommunikationsendgerät für den jeweiligen zusätzlichen Dienst von dem Kommunikationsendgerät erzeugt und zur Speichereinheit gesendet wird. Darüber hinaus verfügt das Kommunikationsnetz über eine Schnittstelle, die zwischen der Speichereinheit und der Dienstesteuerungsstelle zum Weiterleiten der von der Speichereinheit empfangenen Containernachricht an die Dienstesteuerungsstelle.

Die Dienstesteuerungsstelle gemäß der Erfindung weist eine Steuereinrichtung auf, die eine strukturierte Containernachricht über eine Schnittstelle, die die Speichereinheit mit der Dienstesteuerungsstelle verbindet, empfängt und Steuerinformationen und/oder Dienstedaten in der Containernachricht, die zur Dienstebehandlung für den zusätzlichen Dienst mitgesendet werden, auswertet und eine Dienstebehandlung entsprechend der ausgewerteten Steuerinformationen durchführt.

Anhand von zeichnerischen Darstellungen wird der Erfindungsgegenstand im folgenden näher erläutert

Dabei zeigen
- FIG 1: das Blockschaltbild eines Mobilfunknetzes, in dem das erfindungsgemäße Verfahren zur Administrierung von zusätzlichen Diensten abläuft,
- FIG 2: eine schematische Darstellung der am erfindungsgemäßen Verfahren beteiligten Einrichtungen mit dem zur Administrierung erforderlichen Nachrichtenfluß, und
- FIG 3: eine beispielhafte Zusammensetzung der strukturierten Containernachricht auf Grund einer Teilnehmerselbsteingabe in das Kommunikationsendgerät.

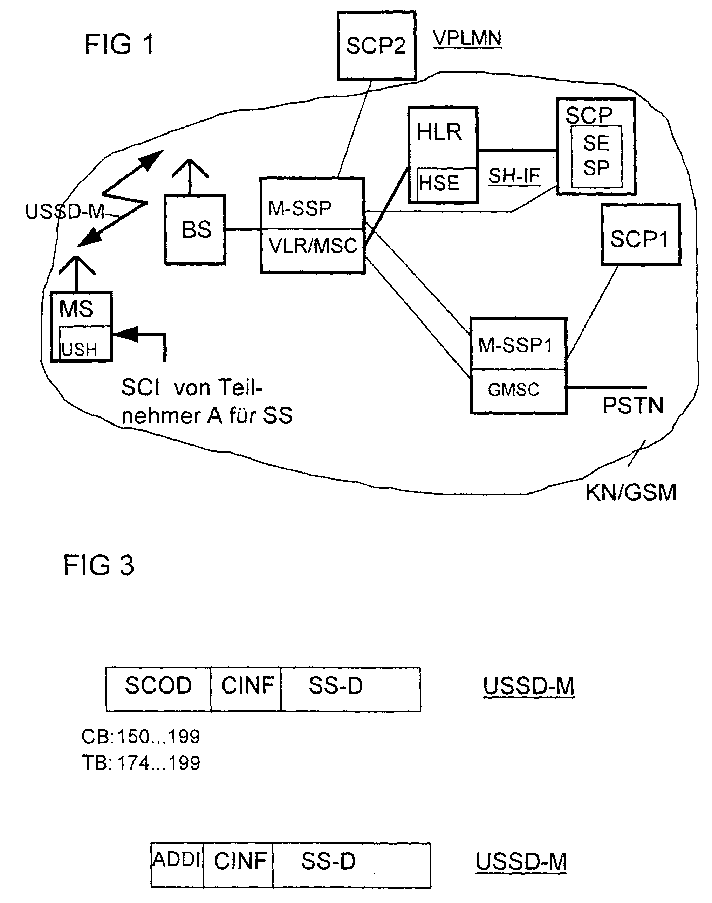

Das Kommunikationsnetz KN nach FIG 1 ist beispielsweise als Mobilfunknetz GSM nach dem gleichnamigen Standard ausgestaltet. Dazu weist es Vermittlungseinrichtungen auf - beispielhaft sind die Vermittlungseinrichtungen VLR/MSC, GMSC gezeigt - die miteinander verbunden sind. Eine Vermittlungseinrichtung VLR/MSC stellt die Verbindung zu einem mobilen Teilnehmer A über eine Basisstation BS, die mit der Vermittlungseinrichtung VLR/MSC drahtgebunden verbunden ist, und über eine Luftschnittstelle zwischen Basisstation BS und einer Mobilstation MS her. Die Mobilstation MS ist das Kommunikationsendgerät des mobilen Teilnehmers A.

Eine weitere Vermittlungseinrichtung GMSC bildet den Netzübergang in ein weiteres Netz, z.B. ein Festnetz PSTN. Weiterhin weist das Kommunikationsnetz KN zur Unterstützung einer intelligenten Netzstruktur Dienstesteuerungsstellen SCP, SCP1, SCP2 (werden nach CAMEL-Phase 1 auch als CSE - CAMEL service environment bezeichnet) auf, die jeweils mit zumindest einer Vermittlungseinrichtung VLR/MSC, GMSC verbunden sind. So ist beispielsweise die Dienstesteuerungsstelle SCP mit der Vermittlungseinrichtung VLR/MSC und die Dienstesteuerungsstelle SCP1 mit der Vermittlungseinrichtung GMSC verbunden. Die Dienstesteuerungsstelle SCP2 liegt in einem anderen Kommunikationsnetz VPLMN, das als Besucher-Mobilfunknetz bei netzübergreifendem Roamen des Teilnehmers aufgefaßt werden kann. Bei diesen Verbindungen ist es nicht notwendig, daß jede Dienstesteuerungsstelle SCP... mit jeder Vermittlungseinrichtung VLR/MSC... direkt verbunden ist, es.genügt wenn diese über das Kommunikationsnetz KN odere andere Netze PSTN über eine #7 Signalisierung erreichbar sind.

Nach FIG 1 ist eine Speichereinheit HLR als Heimatregister des mobilen Teilnehmers A eine eigenständige Einheit, die im vorliegenden Beispiel mit der dargestellten Vermittlungseinrichtung VLR/MSC verbunden ist. Weitere Heimatregister können vorhanden sein und verhalten sich im Hinblick auf das erfindungsgemäße Verfahren analog zur Speichereinheit HLR. In den Vermittlungseinrichtungen VLR/MSC, GMSC sind Dienstevermittlungsstellen M-SSP, M-SSP1 gemäß der intelligenten Netzstruktur zur Durchführung vermittlungstechnischer Dienstefunktionen realisiert. Der Vermittlungseinrichtung VLR/MSC des momentanen Anschlusses des mobilen Teilnehmers A ist ein Besucherregister VLR als vorübergehende Speichereinheit zugeordnet, solange sich der mobile Teilnehmer A mit seiner Mobilstation MS im Einzugsbereich dieser Vermittlungseinrichtung VLR/MSC befindet. Die Speichereinheiten HLR, VLR enthalten jeweils Informationen über GSM-Dienste, die der Teilnehmer A im Kommunikationsnetz KN nutzen kann.

Der mobile Teilnehmer A initiiert durch eine MMI-Operation an der Mobilstation MS eine Teilnehmerselbsteingabe SCI (Service Controlled Input), mit der ein von der Dienstesteuerungsstelle SCP steuerbarer zusätzlicher Dienst SS gekennzeichnet wird. Der Mobilstation MS wird signalisiert, daß eine Dienstesteuerung oder -behandlung für den zusätzlichen Dienst durch die Dienstesteuerungsstelle SCP gewünscht ist, indem die Teilnehmerselbsteingabe SCI anhand einer USSD-Operation (Unstructured Supplementary Services Data) erfolgt. USSD-Operationen betreffen nicht-GSM standardisierte Dienste. Eine USSD-Steuereinheit USH in der Mobilstation erkennt die USSD-MMI-Formatstruktur, erzeugt eine oder mehrere strukturierte Containernachrichten USSD-M und sendet sie über die Luftschnittstelle zum Netz, d.h. zu der für den Teilnehmer A zuständigen Speichereinheit HLR, aus.

In der Containernachricht USSD-M wird beispielsweise ein Dienstecode für den jeweiligen Dienst mitgesendet, an der die Speichereinheit HLR erkennt, daß ein von der Dienstesteuerungsstelle SCP zu steuernder zusätzlicher Dienst betroffen ist. Alternativ zu dem individuellen Dienstecode kann auch eine für mehrere zusätzliche Dienste gemeinsame Steuerinformation in der Containernachricht USSD-M enthalten sein. Steuerinformation oder Dienstecode ermöglichen der Speichereinheit eine Unterscheidung, ob die Containernachricht USSD-M für einen in der Speichereinheit HLR registrierten Dienst oder für einen in der Dienstesteuerungsstelle SCP abzuwickelnden Dienst bestimmt ist.

Die Speichereinheit HLR weist eine Steuereinrichtung HSE auf, von der die Containernachricht USSD-M empfangen und hinsichtlich des Inhalts ausgewertet wird. Durch die Auswertung der Steuerinformation oder des Dienstecodes erkennt sie, daß die Containernachricht USSD-M an die Dienstesteuerungsstelle SCP weiterzuleiten ist. Gemäß der Erfindung ist die Speichereinheit HLR über eine Schnittstelle SH-IF mit der Dienstesteuerungsstelle SCP direkt verbunden, sodaß die Containernachricht USSD-M gemäß einem Schnittstellenprotokoll zur Dienstesteuerungsstelle SCP übertragen wird. Vorzugsweise wird als Protokoll das im Mobilfunknetz zur Kommunikation der Netzeinrichtungen bereits verwendete mobilfunkspezifischen Signalisierungsprotokoll (MAP, Mobile Application Part) benutzt und für die Übertragungsstrecke zur Dienstesteuerungsstelle SCP erweitert. Der Inhalt der Containernachricht USSD-M kann dabei optional vollständig oder teilweise - z.B. abhängig von der durchzuführender Dienstebehandlung und den erforderlichen Steuerinformationen und/oder Dienstedaten- in einer neuen Nachricht oder in der bestehenden Nachricht weitergeleitet werden.

In der Containernachricht USSD-M können auch Steuerinformationen zur Behandlung von Dienstedaten des jeweiligen zusätzlichen Dienstes und die Dienstedaten selbst - z.B. bei Modifikation des Dienstes - mitgesendet und von der Dienstesteuerungsstelle SCP ausgewertet werden. Beispielhafte Dienstesteuerfunktionen sind Registrieren, Aktivieren/ Deaktivieren, Freigeben oder ein Modifizieren des jeweiligen zusätzlichen Dienstes, die abhängig von den ausgewerteten Steuerinformationen durch die Dienstesteuerungsstelle ausgeführt werden können.

Die Dienstesteuerungsstelle SCP verfügt über eine Steuereinrichtung SE, die die über die Schnittstelle SH-IF eintreffende Containernachricht USSD-M empfängt, die enthaltenen Steuerinformationen und/oder Dienstedaten auswertet und eine Dienstebehandlung entsprechend der ausgewerteten Steuerinformationen durchführt. Dazu weist sie auch eine Speichereinrichtung SP auf, von der alle möglichen Daten und Informationen , die sich auf die zusätzlichen Dienste beziehen, nach der Dienstebehandlung entsprechend der ausgewerteten Steuerinformationen gespeichert werden.

Von der Dienstesteuerungsstelle SCP wird auch eine oder mehrere, den zusätzlichen Dienst betreffende Nachrichten erzeugt und über die Schnittstelle SH-IF zur Speichereinheit HLR in der Gegenrichtung gesendet.Diese leitet die Nachricht zu dem Kommunikationsendgerät MS weiter. Damit können auch netzseitig Dialoge initiiert und Nachrichten mit Informationen von der zusätzliche Dienste steuernden Dienstesteuerungsstelle SCP direkt zur Speichereinheit HLR und somit transparent für das Kommunikationsnetz KN zum Teilnehmer A bzw. Kommunikationsendgerät MS transportiert werden.

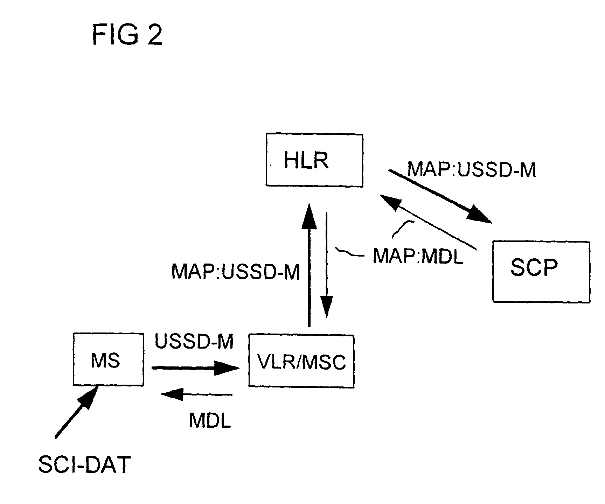

FIG 2 zeigt in einer schematischen Darstellung den zur Administrierung erforderlichen Nachrichtenfluß zwischen den am erfindungsgemäßen Verfahren beteiligten Einrichtungen. Teilnehmerselbsteingabedaten SCI-DAT gelangen zur Mobilstation MS, die die USSD-Containernachricht USSD-M - deren Struktur beispielhaft in FIG 3 dargestellt ist - erzeugt und zur Vermittlungseinrichtung VLR/MSC im Netz sendet. Die Vermittlungseinrichtung VLR/MSC stellt eine Signalisierungsverbindung mit dem zuständigen Heimatregister HLR her und übermittelt die Containernachricht USSD-M dem Heimatregister HLR unter Verwendung des MAP-Protokolls. Nach der Auswertung des Nachrichteninhalts und Vorliegen der gemeinsamen Steuerinformation oder des Dienstecodes erfolgt das Weiterleiten der Containernachricht USSD-M direkt zur Dienstesteuerungsstelle SCP. In der Gegenrichtung wird zumindest eine Nachricht MDL netzseitig von der Dienstesteuerungsstelle SCP erzeugt und ebenfalls unter Verwendung des MAP-Protokolls zum Heimatregister HLR und von dort zu der für den Teilnehmer aktuell zuständigen Vermittlungseinrichtung VLR/MSC übertragen. Die Vermittlungseinrichtung VLR/MSC stellt eine Signalisierungsverbindung zur Mobilstation über die Luftschnittstelle her und sendet die Nachricht MDL aus. Die Mobilstation MS wertet die eintreffende Nachricht MDL aus und zeigt dem Teilnehmer vorzugsweise Informationen an, die sich auf den mit der Teilnehmerselbsteingabe steuerbaren Dienst beziehen. So kann beispielsweise dem Teilnehmer eine erfolgreich ausgeführte Aktivierung des Dienstes oder Modifikation der Dienstedaten durch die Dienstesteuerungsstelle SCP auf diese Weise mitgeteilt werden.

FIG 3 zeigt an zwei Beispielen die Zusammensetzung der Containernachricht USSD-M. In dem oben dargestellten Fall enthält die Nachricht einen Dienstecode SCOD für den von der Teilnehmerselbsteingabe betroffenen zusätzlichen Dienst. Der Dienstecode SCOD kann für jeden Dienst individuell oder für mehrere oder alle Dienste gemeinsam festgelegt sein. Aus einem Dienstecodebereich CB, der für Anwendungen in einem Mobilfunknetz zur Ansteuerung des Heimatregisters die Codes 150...190 aufweist, wird zumindest ein Teilbereich TB mit beispielsweise den Codes 174...199 zur Ansteuerung der Dienstesteuerungsstelle SCP reserviert. Die Codes 150...173 verbleiben für die im Heimatregister registrierten Dienste. Bei der Auswertung der Containernachricht im Heimatregister wird ein Vergleich des darin enthaltenen Dienstecodes SCOD mit den Codes des Teilbereichs TB durchgeführt und bei Übereinstimmung die Nachricht gemäß der Erfindung über die neue Schnittstelle weitergeleitet. Die Aufteilung der möglichen Dienstecodes bewirkt, daß nicht automatisch alle Nachrichten, die auf Grund einer Teilnehmerselbsteingabe erzeugt werden, sondern nur die für die Dienstebehandlung in der Dienstesteuerungsstelle SCP bestimmten Nachrichten weitergeleitet werden. Diese Vorgehensweise spart Signalisierungsaufwand.

In dem unten dargestellten Fall enthält die Nachricht eine gemeinsame Steuerinformation ADDI, die für mehrere oder alle von der Teilnehmerselbsteingabe betroffenen zusätzlichen Dienste verwendet wird. Das Heimatregister erkennt an der einzelnen Steuerinformation ADDI, die einen separaten Steuerparameter für die Dienstesteuerung darstellt, daß die Nachricht weiterzuleiten ist. Dabei kann die Steuerinformation ADDI aus einem einzigen Bit bestehen, das von der Mobilstation vor dem Aussenden der Nachricht gesetzt wird, um die obige Wirkung bei dem Heimatregister zu erzielen.

Beiden Beispielen ist gemeinsam, daß in der Containernachricht USSD-M an den Dienstecode SCOD bzw. an die Steuerinformation CINF die Steuerinformationen CINF zur Dienstebehandlung für den gekennzeichneten zusätzlichen Dienst anschließen. Die Steuerinformationen CINF signalisieren, welche auf den Dienst bezogene Funktionen ausgeführt werden sollen. Ein Datenfeld mit Dienstedaten SS-D kann optional in der Nachricht eingerichtet werden, um z.B. bestehende Dienstedaten durch neue Dienstedaten zu ersetzen oder zu ergänzen.

## Patentansprüche

1. Verfahren zur Administrierung zusätzlicher Dienste (SS) in einem Kommunikationsnetz (KN)
- mit vernetzten Vermittlungseinrichtungen (GMSC, VLR/MSC), an die über weitere Einrichtungen (BS) den Zugang von Teilnehmern (A) ermöglichende Kommunikationsendgeräte (MS) anschließbar sind und/oder über die Übergänge zu mindestens einem weiteren Netz (PSTN) bewirkt werden können,
- mit zumindest einer Speichereinheit (HLR), die Dienste des Kommunikationsnetzes (KN) für den Teilnehmer registriert,
bei dem eine Teilnehmerselbsteingabe (SCI) in das Kommunikationsendgerät (MS) von dem Teilnehmer (A) für den jeweiligen zusätzlichen Dienst (SS) initiiert wird und auf Grund der Teilnehmerselbsteingabe zumindest eine strukturierte Containernachricht (USSD-M) von dem Kommunikationsendgerät (MS) erzeugt und zur Speichereinheit (HLR) gesendet wird,
**dadurch gekennzeichnet,**
- **daß** zur Nutzung von durch eine Dienstesteuerungsstelle (SCP) gemäß einer Intelligenten Netzstruktur steuerbaren zusätzlichen Diensten eine Schnittstelle (SH-IF) unmittelbar zwischen der Speichereinheit (HLR) und der Dienstesteuerungsstelle (SCP) implementiert wird, und
- **daß** die empfangene Containernachricht (USSD-M) nach Auswertung deren Inhalts direkt zur Dienstesteuerungsstelle (SCP) gemäß einem Schnittstellenprotokoll übertragen wird.

2. Verfahren nach Anspruch 1, bei dem
ein Dienstecode (SCOD) in der strukturierten Containernachricht (USSD-M) mitgesendet und von der Speichereinheit (HLR) ausgewertet wird und abhängig von dem Auswerteergebnis die Containernachricht (USSD-M) zur Dienstesteuerungsstelle (SCP) weitergeleitet wird.

3. Verfahren nach Anspruch 2, bei dem
der Dienstecode (SCOD) mit Dienstecodes eines Dienstecodebereichs (CB) verglichen wird, durch die die von der Dienstesteuerungsstelle (SCP) steuerbaren zusätzlichen Dienste (SS) **gekennzeichnet** werden, und
bei Übereinstimmung mit einem der Dienstecodes des Dienstecodebereichs (CB) die Containernachricht (USSD-M) zur Dienstesteuerungsstelle (SCP) weitergeleitet wird.

4. Verfahren nach Anspruch 3, bei dem
als Dienstecodebereich für die von der Dienstesteuerungsstelle (SCP) steuerbaren zusätzlichen Dienste zumindest ein Teilbereich (TB) eines zur Ansteuerung der Speichereinheit (HLR) benutzten Dienstecodebereichs (CB) reserviert wird.

5. Verfahren nach Anspruch 1, bei dem
eine für mehrere von der Dienstesteuerungsstelle (SCP) steuerbaren zusätzlichen Dienste gemeinsame Steuerinformation (ADDI) in der strukturierten Containernachricht (USSD-M) mitgesendet und von der Speichereinheit (HLR) ausgewertet wird, die der Speichereinheit (HLR) jeweils signalisiert, die Containernachricht (USSD-M) an die Dienstesteuerungsstelle (SCP) weiterzuleiten.

6. Verfahren nach einem der vorhergehenden Ansprüche, bei dem das im Kommunikationsnetz (KN) benutzte Signalisierungsprotokoll (MAP) als Schnittstellenprotokoll zur Übertragung der Containernachricht (USSD-M) auf der Schnittstelle zwischen der Speichereinheit (HLR) und der Dienstesteuerungsstelle (SCP) verwendet wird.

7. Verfahren nach einem der vorhergehenden Ansprüche, bei dem Steuerinformationen (CINF) zur Dienstebehandlung für den jeweiligen zusätzlichen Dienst und/oder Dienstedaten (SS-D) in der strukturierten Containernachricht (USSD-M) mitgesendet und von der Dienstesteuerungsstelle (SCP) ausgewertet werden.

8. Verfahren nach Anspruch 7, bei dem
abhängig von der ausgewerteten Steuerinformationen (CINF) die Dienstesteuerungsstelle (SCP) ein Registrieren, ein Aktivieren/Deaktivieren, ein Freigeben oder ein Modifizieren des jeweiligen zusätzlichen Dienstes durchführt.

9. Verfahren nach einem der vorhergehenden Ansprüche, bei dem von der Dienstesteuerungsstelle (SCP) eine den zusätzlichen Dienst betreffende Nachricht (MDL) erzeugt und über die Schnittstelle (SH-IF) zur Speichereinheit (HLR) gesendet wird, die die Nachricht zu dem Kommunikationsendgerät (MS) weiterleitet.

10. Verfahren nach nach einem der vorhergehenden Ansprüche, bei dem von einem mobilen Teilnehmer eines Mobilfunknetzes (GSM) die Teilnehmerselbsteingabe in eine Mobilstation (MS) durchgeführt wird, und
die Containernachricht (USSD-M) von der Mobilstation (MS) zu dem für den mobilen Teilnehmer zuständigen Heimatregister (HLR) des Mobilfunknetzes (GSM) gesendet und vom Heimatregister (HLR) über die Schnittstelle (SH-IF) zur Dienstesteuerungsstelle (SCP) weitergeleitet wird.

11. Verfahren nach Anspruch 10, bei dem
ein mobilfunkspezifisches Signalisierungsprotokoll (MAP) zur Übertragung der Containernachricht (USSD-M) auf der Schnittstelle (SH-IF) zwischen Heimatregister (HLR) und Dienstesteuerungsstelle (SCP) verwendet wird.

12. Kommunikationsnetz (KN) zur Administrierung zusätzlicher Dienste (SS)
- mit vernetzten Vermittlungseinrichtungen (GMSC, VLR/MSC), an die über weitere Einrichtungen (BS) den Zugang von Teilnehmern (A) ermöglichende Kommunikationsendgeräte (MS) anschließbar sind und/oder über die Übergänge zu mindestens einem weiteren Netz (PSTN) bewirkt werden können,
- mit zumindest einer Speichereinheit (HLR), die Dienste des Kommunikationsnetzes (KN) für den Teilnehmer registriert,
wobei die Speichereinheit (HLR) eine Steuereinrichtung (HSE) zum Empfangen und Auswerten zumindest einer strukturierten Containernachricht (USSD-M) aufweist, die auf Grund einer von dem Teilnehmer (A) durchgeführten Teilnehmerselbsteingabe (SCI) in das Kommunikationsendgerät (MS) für den jeweiligen zusätzlichen Dienst (SS) von dem Kommunikationsendgerät (MS) erzeugt und zur Speichereinheit (HLR) gesendet wird,
**dadurch gekennzeichnet,**
**daß** zur Nutzung von durch eine Dienstesteuerungsstelle (SCP) gemäß einer Intelligenten Netzstruktur steuerbaren zusätzlichen Diensten eine Schnittstelle (SH-IF) unmittelbar zwischen der Speichereinheit (HLR) und der Dienstesteuerungsstelle (SCP) implementiert ist und das Kommunikationsnetz devart ausgestalted ist, daß über die Schnittstelle die empfangene Containernachricht (USSD-M) nach Auswertung deren Inhalts direkt zur Dienstesteuerungsstelle (SCP) gemäß einem Schnittstellenprotokoll übertragbar ist.

13. Dienstesteuerungsstelle (SCP) zum Steuern zusätzlicher Dienste (SS)
für ein Kommunikationsnetz (KN)
- mit vernetzten Vermittlungseinrichtungen (GMSC, VLR/MSC), an die über weitere Einrichtungen (BS) den Zugang von Teilnehmern (A) ermöglichende Kommunikationsendgeräte (MS) anschließbar sind und/oder über die Übergänge zu mindestens einem weiteren Netz (PSTN) bewirkt werden können,
- mit zumindest einer Speichereinheit (HLR), die Dienste des Kommunikationsnetzes (KN) für den Teilnehmer registriert, **dadurch gekennzeichnet, daß** die Dienstesteuerungsstelle (SCP) eine Steuereinrichtung (SE) aufweist
- zum unmittelbaren Empfangen einer Containernachricht (USSD-M) für den zusätzlichen Dienst (SS) über eine Schnittstelle (SH-IF), die die Speichereinheit (HLR) direkt mit der Dienstesteuerungsstelle (SCP) verbindet,
- zum Auswerten von Steuerinformationen (CINF) und/oder Dienstedaten in der Containernachricht (USSD-M), die zur Dienstebehandlung für den zusätzlichen Dienst mitgesendet werden, und
- zum Durchführen einer Dienstebehandlung entsprechend der ausgewerteten Steuerinformationen (CINF).

14. Dienstesteuerungsstelle (SCP) nach Anspruch 3, die eine Speichereinrichtung (SP) aufweist zum Speichern der eintreffenden Containernachricht (USSD-M) und der Dienstedaten des zusätzlichen Dienstes nach der Dienstebehandlung entsprechend der ausgewerteten Steuerinformationen (CINF).

## Claims

1. Method for the administration of supplementary services (SS) in a communications network (KN)
- having networked switching facilities (GMSC, VLR/MSC) to which communications terminals (MS) enabling subscriber (A) access can be connected via further facilities (BS) and/or via which transitions to at least one further network (PSTN) can be made,
- having at least one memory unit (HLR), which records services of the communications network (KN) for the subscriber,
in which a subscriber-activated input (SCI) into the communications terminal (MS) is initiated by the subscriber (A) for the supplementary service (SS) concerned and the subscriber-activated input (SCI) causes at least one structured container message (USSD-M) to be produced by the communications terminal (MS) and sent to the memory unit (HLR),
**characterized**
- **in that** an interface (SH-IF) is implemented directly between the memory unit (HLR) and the service control point (SCP) for use of supplementary services which can be controlled by a service control point (SCP) in line with an intelligent network structure, and
- **in that**, following evaluation of its content, the received container message (USSD-M) is transmitted directly to the service control point (SCP) on the basis of an interface protocol.

2. Method according to Claim 1, in which
a service code (SCOD) is also sent in the structured container message (USSD-M) and is evaluated by the memory unit (HLR), and, depending on the evaluation result, the container message (USSD-M) is transmitted further to the service control point (SCP).

3. Method according to Claim 2, in which
the service code (SCOD) is compared with service codes in a service-code range (CB) which characterize the supplementary services (SS) which can be controlled by the service control point (SCP), and
the container message (USSD-M) is transmitted further to the service control point (SCP) if there is a match with one of the service codes in the service-code range (CB).

4. Method according to Claim 3, in which
at least one subrange (TB) of a service-code range (CB) used for driving the memory unit (HLR) is reserved as the service-code range for the supplementary services which can be controlled by the service control point (SCP).

5. Method according to Claim 1, in which
an item of control information (ADDI) which is common to a plurality of supplementary services which can be controlled by the service control point (SCP) is also sent in the structured container message (USSD-M) and is evaluated by the memory unit (HLR), which in each case signals to the memory unit (HLR) that the container message (USSD-M) should be transmitted further to the service control point (SCP).

6. Method according to one of the preceding claims, in which the signalling protocol (MAP) used in the communications network (KN) is used as an interface protocol for transmission of the container message (USSD-M) on the interface between the memory unit (HLR) and the service control point (SCP).

7. Method according to one of the preceding claims, in which control information (CINF) relating to service handling for the supplementary service concerned and/or service data (SS-D) is also sent in the structured container message (USSD-M) and is evaluated by the service control point (SCP).

8. Method according to Claim 7, in which, on the basis of the evaluated control information (CINF), the service control point (SCP) records, activates/deactivates, enables or modifies the supplementary service concerned.

9. Method according to one of the preceding claims, in which
the service control point (SCP) produces a message (MDL) relating to the supplementary service and sends it via the interface (SH-IF) to the memory unit (HLR), which transmits the message further to the communications terminal (MS).

10. Method according to one of the preceding claims,
in which a mobile subscriber in a mobile radio network (GSM) performs the subscriber-activated input into a mobile station (MS), and
the container message (USSD-M) is sent from the mobile station (MS) to the home location register (HLR), relevant to the mobile subscriber, in the mobile radio network (GSM) and is transmitted further from the home location register (HLR) to the service control point (SCP) via the interface (SH-IF).

11. Method according to Claim 10, in which
a signalling protocol (MAP) specific to mobile radios is used for transmitting the container message (USSD-M) on the interface (SH-IF) between the home location register (HLR) and the service control point (SCP).

12. Communications network (KN) for the administration of supplementary services (SS)
- having networked switching facilities (GMSC, VLR/MSC) to which communications terminals (MS) enabling subscriber (A) access can be connected via further facilities (BS) and/or via which transitions to at least one further network (PSTN) can be made,
- having at least one memory unit (HLR), which records services of the communications network (KN) for the subscriber,
the memory unit (HLR) having a control device (HSE) for receiving and evaluating at least one structured container message (USSD-M), a subscriber-activated input (SCI) into the communications terminal (MS) performed by the subscriber (A) for the supplementary service (SS) concerned causing said container message to be produced by the communications terminal (MS) and sent to the memory unit (HLR),
**characterized**
**in that** an interface (SH-IF) is implemented directly between the memory unit (HLR) and the service control point (SCP) for use of supplementary services which can be controlled by a service control point (SCP) in line with an intelligent network structure, and the communications network is designed such that this interface can be used to transmit the received container message (USSD-M), following evaluation of its content, directly to the service control point (SCP) on the basis of an interface protocol.

13. Service control point (SCP) for controlling supplementary services (SS)
for a communications network (KN)
- having networked switching facilities (GMSC, VLR/MSC) to which communications terminals (MS) enabling subscriber (A) access can be connected via further facilities (BS) and/or via which transitions to at least one further network (PSTN) can be made,
- having at least one memory unit (HLR), which records services of the communications network (KN) for the subscriber, **characterized**
**in that** the service control point (SCP) has a control device (SE)
- for directly receiving a container message (USSD-M) for the supplementary service (SS) via an interface (SH-IF) linking the memory unit (HLR) to the service control point (SCP),
- for evaluating control information (CINF) and/or service data in the container message (USSD-M), which are/is also sent for service handling for the supplementary service, and
- for carrying out service handling on the basis of the evaluated control information (CINF).

14. Service control point (SCP) according to Claim 13, having a memory device (SP) for storing the incoming container message (USSD-M) and the service data for the supplementary service after service handling on the basis of the evaluated control information (CINF).

## Revendications

1. Procédé pour la gestion de services supplémentaires (SS) dans un réseau de communication (KN)
- ayant des dispositifs commutateurs (GMSC, VLR/MSC) en réseau auxquels peuvent être raccordés des terminaux de communication (MS) permettant l'accès d'abonnés (A) par l'intermédiaire d'autres dispositifs (BS) et/ou par l'intermédiaire desquels peuvent être établies des passerelles vers au moins un autre réseau (PSTN),
- ayant au moins une unité de mémoire (HLR) qui enregistre des services du réseau de communication (KN) pour l'abonné,
dans lequel une entrée automatique d'abonné (SCI) est déclenchée dans le terminal de communication (MS) par l'abonné (A) pour le service supplémentaire respectif (SS) et, à partir de l'entrée automatique d'abonné, au moins un message conteneur structuré (USSD-M) est produit par le terminal de communication (MS) et est envoyé à l'unité de mémoire (HLR),
**caractérisé par le fait que**
- pour l'exploitation de services supplémentaires commandables par un poste de commande de services (SCP) selon une structure en réseau intelligente, une interface (SH-IF) est installée directement entre l'unité de mémoire (HLR) et le poste de commande de services (SCP), et
- le message conteneur reçu (USSD-M), après évaluation de son contenu, est transmis directement au poste de commande de services (SCP) selon un protocole d'interface.

2. Procédé selon la revendication 1, dans lequel un code de service (SCOD) est envoyé en même temps dans le message de conteneur structuré (USSD-M) et est évalué par l'unité de mémoire (HLR) et, en fonction du résultat d'évaluation, le message conteneur (USSD-M) est retransmis au poste de commande de services (SCP).

3. Procédé selon la revendication 2, dans lequel
le code de service (SCOD) est comparé à des codes de services d'une zone de codes de services (CB) qui **caractérisent** les services supplémentaires (SS) commandables par le poste de commande de services (SCP), et
en cas de coïncidence avec l'un des codes de services de la zone de codes de services (CB), le message conteneur (USSD-M) est retransmis vers le poste de commande de services (SCP).

4. Procédé selon la revendication 3, dans lequel, comme zone de codes de services pour les services supplémentaires commandables par le poste de commande de services (SCP), on réserve au moins une zone partielle (TB) d'une zone de codes de services (CB) utilisée pour la commande de l'unité de mémoire (HLR).

5. Procédé selon la revendication 1, dans lequel une information de commande (ADDI) commune à plusieurs services supplémentaires commandables par le poste de commande de services (SCP) est envoyée en même temps dans le message conteneur structuré (USSD-M) et est évaluée par l'unité de mémoire (HLR), laquelle information signale à chaque fois à l'unité de mémoire (HLR) de retransmettre le message conteneur (USSD-M) au poste de commande de services (SCP).

6. Procédé selon l'une des revendications précédentes, dans lequel le protocole de signalisation (MAP) utilisé dans le réseau de communication (KN) est utilisé comme protocole d'interface pour la transmission du message conteneur (USSD-M) sur l'interface entre l'unité de mémoire (HLR) et le poste de commande de services (SCP).

7. Procédé selon l'une des revendications précédentes, dans lequel des informations de commande (CINF) pour le traitement de service pour le service supplémentaire respectif et/ou des données de service (SS-D) sont envoyées en même temps dans le message conteneur structuré (USSD-M) et sont évaluées par le poste de commande de services (SCP).

8. Procédé selon la revendication 7, dans lequel, en fonction des informations de commande (CINF) évaluées, le poste de commande de services (SCP) effectue un enregistrement, une activation/désactivation, une libération ou une modification du service supplémentaire respectif.

9. Procédé selon l'une des revendications précédentes, dans lequel le poste de commande de services (SCP) produit un message (MDL) concernant le service supplémentaire et l'envoie par l'intermédiaire de l'interface (SH-IF) à l'unité de mémoire (HLR) qui retransmet le message au terminal de communication (MS).

10. Procédé selon l'une des revendications précédentes, dans lequel
un abonné mobile d'un réseau de radiocommunication mobile (GSM) effectue l'entrée automatique d'abonné dans une station mobile (MS), et
le message conteneur (USSD-M) est envoyé par la station mobile (MS) à l'enregistreur de localisation nominal (HLR), compétent pour l'abonné mobile, du réseau de radiocommunication mobile (GSM) et est retransmis par l'enregistreur de localisation nominal (HLR) par l'intermédiaire de l'interface (SH-IF) vers le poste de commande de services (SCP).

11. Procédé selon la revendication 10, dans lequel on utilise un protocole de signalisation (MAP) spécifique à la radiocommunication mobile pour la transmission du message conteneur (USSD-M) sur l'interface (SH-IF) entre l'enregistreur de localisation nominal (HLR) et le poste de commande de services (SCP).

12. Réseau de communication (KN) pour la gestion de services supplémentaires (SS)
- avec des dispositifs commutateurs (GMSC, VLR/MSC) en réseau auxquels peuvent être raccordés des terminaux de communication (MS) permettant l'accès d'abonnés (A) par l'intermédiaire d'autres dispositifs (BS) et/ou par l'intermédiaire desquels peuvent être établies des passerelles vers au moins un autre réseau (PSTN),
- avec au moins une unité de mémoire (HLR) qui enregistre des services du réseau de communication (KN) pour l'abonné,
dans lequel l'unité de mémoire (HLR) comporte un dispositif de commande (HSE) pour la réception et l'évaluation d'au moins un message conteneur structuré (USSD-M) qui, à partir d'une entrée automatique d'abonné (SCI) effectuée par l'abonné (A), est produit dans le terminal de communication (MS) pour le service supplémentaire respectif (SS) par le terminal de communication (MS) et est envoyé à l'unité de mémoire (HLR),
**caractérisé par le fait que**
pour l'exploitation de services supplémentaires commandables par un poste de commande de services (SCP) selon une structure en réseau intelligente, une interface (SH-IF) est installée directement entre l'unité de mémoire (HLR) et le poste de commande de services (SCP), et le réseau de communication est conçu de telle sorte que, par l'intermédiaire de l'interface, le message conteneur reçu (USSD-M), après évaluation de son contenu, peut être transmis directement au poste de commande de services (SCP) selon un protocole d'interface.

13. Poste de commande de services (SCP) pour la commande de services supplémentaires (SS)
pour un réseau de communication (KN)
- avec des dispositifs commutateurs (GMSC, VLR/MSC) en réseau auxquels peuvent être raccordés des terminaux de communication (MS) permettant l'accès d'abonnés (A) par l'intermédiaire d'autres dispositifs (BS) et/ou par l'intermédiaire desquels peuvent être établies des passerelles vers au moins un autre réseau (PSTN),
- avec au moins une unité de mémoire (HLR) qui enregistre des services du réseau de communication (KN) pour l'abonné,
**caractérisé par le fait que** le poste de commande de services (SCP) comporte un dispositif de commande (SE)
- pour la réception directe d'un message conteneur (USSD-M) pour le service supplémentaire (SS) par l'intermédiaire d'une interface (SH-IF) qui relie l'unité de mémoire (HLR) directement au poste de commande de services (SCP),
- pour l'évaluation d'informations de commande (CINF) et/ou de données de service dans le message conteneur (USSD-M) qui sont envoyées en même temps pour le traitement de service pour le service supplémentaire, et
- pour la mise en oeuvre d'un traitement de service selon les informations de commande (CINF) évaluées.

14. Poste de commande de services (SCP) selon la revendication 13, qui comporte un dispositif de commande (SP) pour la mémorisation du message conteneur arrivant (USSD-M) et des données du service supplémentaire après le traitement de service selon les informations de commande (CINF) évaluées.
